# EUROPEAN PATENT APPLICATION

(11) **EP 4 559 546 A1**
(43) Date of publication of application: **28.05.2025**
(21) Application number: 24202815.7
(22) Date of filing: 26.09.2024
(51) Int. Cl.: A63F 13/211, A63F 13/219, A63F 13/53, A63F 13/837

(54) **DISPLAY DEVICE AND DISPLAY METHOD FOR DYNAMICALLY ADJUSTING BALLISTIC PATH**

(30) Priority: 21.11.2023 TW 112144858
(71) Applicant: Giga-Byte Technology Co., Ltd., New Taipei City 231 (TW)
(72) Inventor: WU, Shu-Cheng, 231 New Taipei City (TW); CHANG, Kuei-Shan, 231 New Taipei City (TW); CHOU, Shih-Chieh, 231 New Taipei City (TW)
(74) Representative: Becker, Eberhard

(57) **Abstract**

Disclosed is a display device (100) and a display method for dynamically adjusting a ballistic path. The display device (100) includes a display panel (130), a communication interface (120), and a controller (110). The communication interface (120) is electrically connected to an input device (210) and a host device (220) and is used to receive display data of a display image from the host device (220) and to receive direction data and distance data from the input device (210). The controller (110) is electrically connected to the display panel (130) and the communication interface (120) and is used to drive the display panel (130) to display the display image according to the display data. The controller (110) further displays a ballistic path image in the display image through the display panel (130), and the controller dynamically adjusts the ballistic path image according to the direction data and the distance data.

## Description

### BACKGROUND

### Technical Field

The disclosure relates to a device, and in particular to a display device and a display method for dynamically adjusting a ballistic path.

### Description of Related Art

When a user plays a shooting game and shoots, the shooting weapon in the game may drift in the center of subsequent continuous shooting due to the preset recoil of the shooting weapon, causing the shooting weapon to shoot in an unexpected direction. Therefore, generally speaking, the user needs to use mouse movement to control the ballistic path. However, if the user does not control well, then the user is not able to accurately aim at the enemy, and the shot is deflected.

### SUMMARY

The disclosure provides a display device and a display method for dynamically adjusting a ballistic path, which can provide a good display effect.

The display device of the disclosure includes a display panel, a communication interface, and a controller. The communication interface is electrically connected to an input device and a host device and is used to receive display data of a display image from the host device and to receive direction data and distance data from the input device. The controller is electrically connected to the display panel and communication interface and is used to drive the display panel to display the display image according to the display data. The controller further displays a ballistic path image in the display image through the display panel, and the controller dynamically adjusts the ballistic path image based on the direction data and the distance data.

In an embodiment of the disclosure, the display panel displays the ballistic path image in the display image through an on-screen display (OSD).

In an embodiment of the disclosure, the adjustment direction of the ballistic path image is opposite to the direction data.

In an embodiment of the disclosure, the communication interface is further electrically connected to another input device, and in response to a shortcut key of the other input device being triggered, the controller displays the ballistic path image in the display image through the display panel.

In an embodiment of the disclosure, the display device further includes an image database. The image database is electrically connected to the controller and is used to store multiple built-in ballistic path images. The controller selects one of the multiple built-in ballistic path images as the ballistic path image according to an object type of a shooting object in the display data.

In an embodiment of the disclosure, the display device further includes an image database. The image database is electrically connected to the controller and is used to store multiple built-in ballistic path images. The controller selects one of the multiple built-in ballistic path images as the ballistic path image according to a crosshair command provided by the host device.

In an embodiment of the disclosure, the controller is a scaler.

In an embodiment of the disclosure, the communication interface is a hub.

In an embodiment of the disclosure, the hub includes a first universal serial bus and a second universal serial bus. The first universal serial bus is used to electrically connect the input device, and the second universal serial bus is used to electrically connect the host device.

The display method for dynamically adjusting the ballistic path according to the disclosure includes the following steps: receiving, through a communication interface, display data of a display image from a host device; driving, through a controller, a display panel to display the display image according to the display data, and further displaying, through the display panel, a ballistic path image in the display image; receiving, through the communication interface, direction data and distance data from an input device; and adjusting dynamically, through the controller, the ballistic path image according to the direction data and the distance data.

Based on the above, the display device and the display method for dynamically adjusting the ballistic path according to the disclosure can automatically display the ballistic path image, so that the user can quickly correct the shooting crosshair.

In order to make the above-mentioned features and advantages of the disclosure more comprehensible, embodiments are given below and described in detail with reference to the accompanying drawings.

### BRIEF DESCRIPTION OF THE DRAWINGS

FIG. 1 is a schematic diagram of a display device according to an embodiment of the disclosure.
FIG. 2 is a flow chart of a display method for dynamically adjusting a ballistic path according to an embodiment of the disclosure.
FIG. 3 is a schematic diagram of a display image according to an embodiment of the disclosure.

### DESCRIPTION OF THE EMBODIMENTS

Reference will now be made in detail to the exemplary embodiments of the disclosure, examples of the embodiments are illustrated in the accompanying drawings. Whenever possible, the same reference numerals are used in the drawings and descriptions to refer to the same or similar parts.

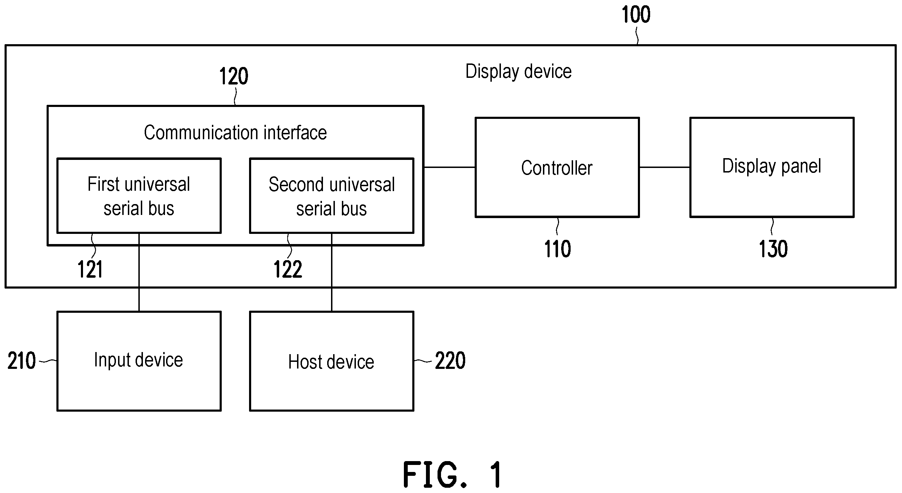

FIG. 1 is a schematic diagram of a display device according to an embodiment of the disclosure. Referring to FIG. 1, a display device 100 includes a controller 110, a communication interface 120, and a display panel 130. The controller 110 is electrically connected to the communication interface 120 and the display panel 130. In this embodiment, the controller 110 may be a scaler. In this embodiment, the communication interface 120 is a hub, and the hub may include a first universal serial bus 121 and a second universal serial bus 122. In this embodiment, the first universal serial bus 121 is used to electrically connect the input device 210, and the second universal serial bus 122 is used to electrically connect the host device 220. The input device 210 may be, for example, a mouse. The host device 220 may be, for example, a computer host. It is worth noting that the input device 210 is connected to the host device 220 through the display device 100. Moreover, the controller 110 may detect an operation command provided by the input device 210 to the host device 220. For example, the input device 210 may output mouse movement data (such as direction data and distance data) to the communication interface 120, and the communication interface 120 may further output the mouse movement data to the host device 220.

In this embodiment, the host device 220 may execute a game program and provide the display data of a game image to the display device 100, so that the display device 100 may display the corresponding display image through the display panel 130 according to the display data, but the disclosure is not limited to game images. In this embodiment, the display panel 130 may be, for example, a liquid crystal display panel, a light-emitting diode (LED) display panel, an organic light-emitting diode (OLED) display panel, or a quantum dot display panel, and the disclosure is not limited thereto.

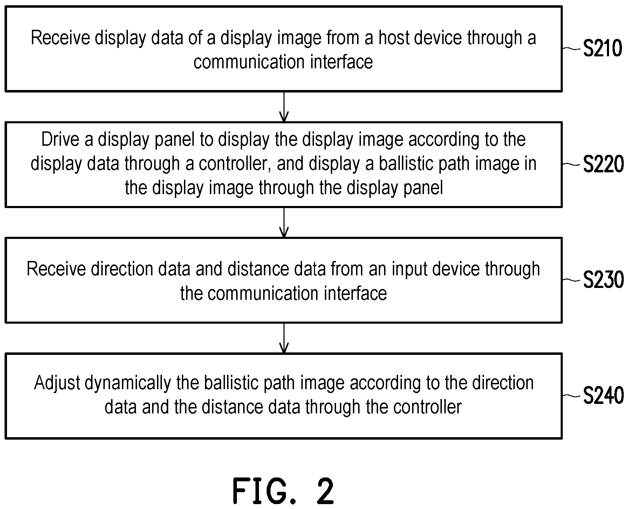

FIG. 2 is a flow chart of a display method for dynamically adjusting a ballistic path according to an embodiment of the disclosure. Referring to FIG. 1 and FIG. 2, the display device 100 may perform the following Steps S210 to S240. In Step S210, the controller 110 may receive the display data of the display image from the host device 220 through the communication interface 120. In this embodiment, the display data is the display data of a shooting game image, but the disclosure is not limited thereto. In Step S220, the controller 110 may drive the display panel 130 to display the display image according to the display data through the controller 110 and further display the ballistic path image in the display image through the display panel 130. It should be noted that the display panel 130 displays the ballistic path image in the display image through an on-screen display (OSD). In other words, the controller 110 covers or overlaps the image of the on-screen display (OSD) on a partial area of the display image. In Step S230, the controller 110 may receive direction data and distance data from the input device 210 through the communication interface 120. In Step S240, the controller 110 can dynamically adjust the ballistic path image according to the direction data and the distance data.

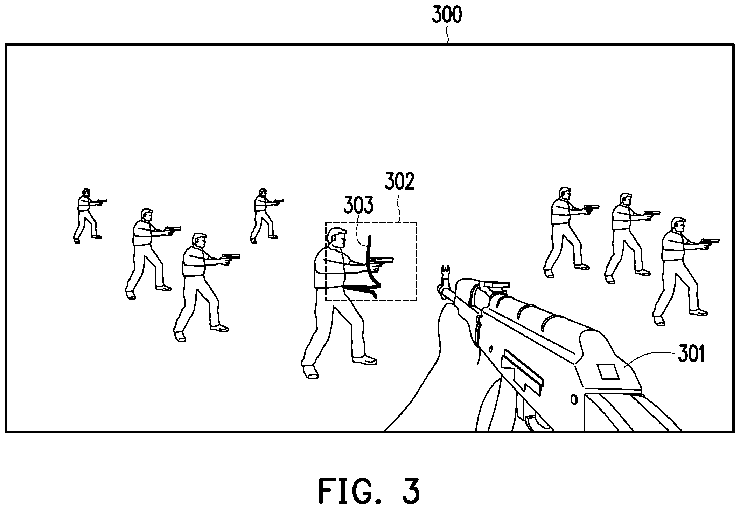

Specifically, reference may be made together with FIG. 3, and FIG. 3 is a schematic diagram of a display image according to an embodiment of the disclosure. In this embodiment, the controller 110 may display a display image 300 in FIG. 3 through the display panel 130. In this embodiment, the display device 100 may further include an image database, in which the image database may store multiple built-in ballistic path images. The communication interface 120 may further be electrically connected to another input device through another universal serial bus, and in response to a shortcut key of another input device being triggered, the controller 110 may select a specific ballistic path image 302 from the image database and display the ballistic path image 302 in the display image 300 through the display panel 130. The another input device may be a keyboard. Alternatively, in an embodiment, the controller 110 may select one of the multiple built-in ballistic path images as the ballistic path image according to a crosshair command provided by the host device 220.

In another embodiment, the controller 110 may automatically detect the display data or the content of the current display image 300, so as to select one of the multiple built-in ballistic path images in the image database as the ballistic path image 302 according an object type of a shooting object 301 in the display data or the current display image 300. In other words, the display device 100 may pre-store images of specific shooting objects of a specific game. When the controller 110 instantly determines that the user uses a specific shooting object of a specific game through image comparison, the display image 300 can automatically display the ballistic path image 302 suitable for the shooting object 301.

It is worth noting that the ballistic path image 302 of the disclosure includes a mouse movement suggestion path 303, in which the mouse movement suggestion path 303 may assist the user in performing continuous shooting operations in a shooting game when automatic shooting crosshair deviation occurs, and the user may be suggested to operate the mouse to control the direction of the ballistic path along the mouse movement suggestion path 303 so as to continuously and accurately shoot a target object. Furthermore, the controller 110 can dynamically adjust the mouse movement suggestion path 303 in the ballistic path image 302 according to the direction data and the distance data of the input device 210. In this regard, the adjustment direction of the mouse movement suggestion path 303 in the ballistic path image 302 is opposite to the direction indicated by the direction data of the input device 210. Also, the movement distance of the mouse movement suggestion path 303 in the ballistic path image 302 may be equal to the distance represented by the distance data of the input device 210. For example, assuming that the mouse movement data output by the input device 210 moves from the origin coordinate (0,0) to the coordinate (0,-20), it may be known that the direction data of the input device 210 is moving downward and the moving distance data is 20. Therefore, the adjustment direction of the mouse movement suggestion path 303 in the ballistic path image 302 is upward movement and the movement distance is 20. The mouse movement suggestion path 303 may be predefined and drawn according to different shooting objects.

In summary, in the display device and the display method for dynamically adjusting the ballistic path of the disclosure, in the process of the user playing a specific shooting game and using a specific shooting object, the adjusted ballistic path image is automatically generated to effectively assist the user in controlling the shooting crosshair of the shooting object by displaying the mouse movement suggestion path.

## Claims

1. A display device (100), comprising:
a display panel (130);
a communication interface (120) electrically connected to an input device (210) and a host device (220) and configured to receive display data of a display image from the host device (220) and to receive direction data and distance data from the input device (210); and
a controller (110) electrically connected to the display panel (130) and the communication interface (120) and configured to drive the display panel (130) to display the display image according to the display data,
wherein the controller (110) further displays a ballistic path image in the display image through the display panel (130), and the controller (110) dynamically adjusts the ballistic path image according to the direction data and the distance data.

2. The display device (100) as claimed in claim 1, wherein the display panel (130) displays the ballistic path image through an on-screen display (OSD) in the display image.

3. The display device (100) as claimed in claim 1, wherein an adjustment direction of the ballistic path image is opposite to the direction data.

4. The display device (100) as claimed in claim 1, wherein a movement distance of a mouse movement suggestion path in the ballistic path image is equal to a distance represented by the distance data of the input device (210).

5. The display device (100) as claimed in claim 1, wherein the communication interface (120) is further electrically connected to another input device (210), and in response to a shortcut key of the another input device (210) being triggered, the controller (110) displays the ballistic path image in the display image through the display panel (130).

6. The display device (100) as claimed in claim 1, further comprising:
an image database electrically connected to the controller (110) and configured to store a plurality of built-in ballistic path images,
wherein the controller (110) selects one of the built-in ballistic path images as the ballistic path image according to an object type of a shooting object in the display data.

7. The display device (100) as claimed in claim 1, further comprising:
an image database electrically connected to the controller (110) and configured to store a plurality of built-in ballistic path images,
wherein the controller (110) selects one of the built-in ballistic path images as the ballistic path image according to a crosshair command provided by the host device (220).

8. The display device (100) as claimed in claim 1, wherein the controller (110) is a scaler, and the communication interface (120) is a hub.

9. The display device (100) as claimed in claim 8, wherein the hub comprises a first universal serial bus (121) and a second universal serial bus (122), the first universal serial bus (121) is configured to electrically connect the input device (210), and the second universal serial bus (122) is configured to electrically connect the host device (220).

10. A display method for dynamically adjusting a ballistic path, comprising:
receiving, through a communication interface (120), display data of a display image from a host device (220);
driving, through a controller (110), a display panel (130) to display the display image according to the display data, and further displaying, through the display panel (130), a ballistic path image in the display image;
receiving, through the communication interface (120), direction data and distance data from an input device (210); and
adjusting dynamically, through the controller (110), the ballistic path image according to the direction data and the distance data.

11. The display method as claimed in claim 10, wherein the display panel (130) displays the ballistic path image through an on-screen display (OSD) in the display image.

12. The display method as claimed in claim 10, wherein an adjustment direction of the ballistic path image is opposite to the direction data.

13. The display method as claimed in claim 10, wherein a movement distance of a mouse movement suggestion path in the ballistic path image is equal to a distance represented by the distance data of the input device (210).

14. The display method as claimed in claim 10, wherein displaying the ballistic path image comprises:
connecting electrically, through the communication interface (120), another input device (210), and in response to a shortcut key of the another input device (210) being triggered, the controller (110) displays the ballistic path image in the display image through the display panel (130).

15. The display method as claimed in claim 10, wherein displaying the ballistic path image comprises:
selecting, through the controller (110), one of a plurality of built-in ballistic path images stored in an image database as the ballistic path image according to an object type of a shooting object in the display data.

16. The display method as claimed in claim 10, wherein displaying the ballistic path image comprises:
selecting, through the controller (110), one of a plurality of built-in ballistic path images as the ballistic path image according to a crosshair command provided by the host device (220).

17. The display method as claimed in claim 10, wherein the controller (110) is a scaler, and the communication interface (120) is a hub.

18. The display method as claimed in claim 17, wherein the hub comprises a first universal serial bus (121) and a second universal serial bus (122), the first universal serial bus (121) is configured to electrically connect the input device (210), and the second universal serial bus (122) is configured to electrically connect the host device (220).
